# EUROPEAN PATENT APPLICATION

(11) **EP 4 383 155 A1**
(43) Date of publication of application: **12.06.2024**
(21) Application number: 22389502.0
(22) Date of filing: 09.12.2022
(51) Int. Cl.: G06Q 10/00, G06Q 10/02, G06Q 10/06, G06Q 50/10

(54) **A METHOD AND SYSTEM FOR MANAGING IMMEDIATE BOOKINGS FROM A PLURALITY OF REGULAR CUSTOMERS BY A SERVICE COMPANY**

(71) Applicant: MOT Booking System ApS, 7900 Nykøbing M (DK)
(72) Inventor: MARKMØLLER, Lasse Hansen, 7900 Nykøbing M (DK)
(74) Representative: Patrade A/S

(57) **Abstract**

A method (1000) for managing immediate bookings from a plurality of regular customers (RC-1, ..., RC-N) by a service company (10), the method (1000) comprising steps of
- requesting (1100) an immediate booking at the service company (10) by pushing a booking push-button (110),
- sending (1200) a signal (200) to the service company (10) through a common server (170),
- receiving (1300) the signal (200) at the service company (10), where the signal (200) activates a lamp (L-X) among a plurality of lamps (L-1, ..., L-N) representing the plurality of regular customers (RC-1, ..., RC-N) optionally the plurality of lamps (L-1, ..., L-N) are positioned on a light board (120),
- responding (1400) to the immediate booking by either
- accepting (1410) the immediate booking by not pushing a response push-button (130) paired with the lighted lamp (L-X), or
- delaying (1420) the immediate booking for a set period by pushing the response push-button (130) paired with the lighted lamp (L-X),

- sending (1500) a response (300) to the regular customer (RC-1) through the common server (170), where the regular costumer (RC-1) is notified about the acceptance or delay of the immediate booking.

## Description

### Field of the Invention

The present invention relates to a method and system for managing immediate bookings using a simple system which can be handled while working on an object, such as a car.

### Background of the Invention

Service companies, such as vehicle inspection facilities or MOT testing centres, will typically perform the necessary checks on demand for customers, such as car repair shops and/or car dealers and/or taxi companies or other companies' cars which must be checked on a regular basis due to the local law. Since there is no booking onsite at the vehicle inspection facilities or MOT testing centres themselves, due to the cars being checked as the cars are deemed fit for inspection by, for example a car repair shop, it therefore often happens that a mechanic must wait upwards of an hour before the car is inspected.

The time in queue is wasted and not being spent in a productive manner, thereby increasing costs for the end customer and lowering the general productivity. Thus, there is a need for a system and a method for managing immediate bookings, where the booking is for a timeslot within the next pre-set time period.

### Object of the Invention

It is an object of the invention to provide a method and a system for managing immediate bookings, using a simple system which can be handled while working on an object, such as a car.

### Description of the Invention

An object of the invention is achieved by a method for managing immediate bookings from a plurality of regular customers by a service company, where the method comprises steps of:
- requesting an immediate booking at the service company by pushing a booking push-button,
- sending a signal to the service company through a common server,
- receiving the signal at the service company, where the signal activates a lamp among a plurality of lamps representing the plurality of regular customers, optionally the plurality of lamps is positioned on a light board,
- responding to the immediate booking by either
   - accepting the immediate booking by not pushing a response push-button paired with the lighted lamp, or
   - delaying the immediate booking for a set period by pushing the response push-button paired with the lighted lamp,
- sending a response to the regular customer through the common server, where the regular costumer is notified about the acceptance or delay of the immediate booking.

Thereby, a method is provided which can be performed while the professionals at the service company are working as the lamp will ensure that the professionals see and decide whether or not to delay the immediate booking. The immediate booking should in this application be seen as a booking within the next hour, preferably within 10 to 30 minutes, depending on the distance between the regular customer and the service company. Since a regular customer is specifically paired with a specific lamp, the professional thus knows when the customer will arrive and can choose to accept or delay the booking based on this.

Each lamp is paired with a specific regular customer so that the professional will know which regular customer has requested a booking.

The plurality of lamps will preferably be installed in a light board to allow for a full overview from a single position. However, the plurality of lamps could be spread between a multitude of positions, each having one or more lamps.

In an embodiment, the service company may be a vehicle inspection facility or a MOT testing centre. Many of these facilities operate with drive-in inspection and as a result it is not possible to book days in advance. Therefore, the inspection is often handled by the mechanic, as the car or motor vehicle has been repaired ahead of the inspection. This results in long queues at the vehicle inspection facility or the MOT testing centre where mechanics wait around for an hour or more, which increases overall costs and lowers productivity. It is estimated that the average wait period can be reduced to 5 to 15 minutes.

In an embodiment, the plurality of regular customers may be a plurality of car repair shops and/or car dealers and/or taxi companies. The regular customers could be companies having a plurality of vehicles which are required to be inspected in accordance with the law of the land. For example, the regular customers could be car repair shops and/or car dealers and/or taxi companies.

The method is not meant for private customers but rather for professional companies with a certain volume of vehicles to be inspected.

A regular customer may have several booking push-buttons so that the professionals or mechanics at the regular customer are not required to search for the booking push-button. However, there may still be only one lamp paired with the specific regular customer even though there are several booking push-buttons. Additionally, a single regular customer can have a corporate size that requires two lamps paired to the regular customer to account for the high chance of receiving two bookings simultaneously.

In an embodiment, the set period for delaying the immediate booking may be 10 or 15 or 20 or 25 or 30 or 45 or 60 minutes.

In the event that the professional is occupied, performing an inspection for example, while other professionals/customers are already waiting in queue or otherwise occupied, the professional can then decide to delay the immediate booking. This could simply be achieved with a single push on the response push-button paired with the regular customer making the request. This delays the immediate booking for an initial set period, within 10 to 30 minutes for instance.

If the immediate booking needs to be delayed beyond the set period, then the professional can decide to push the response button multiple times in succession, such as two, three, four, or more. The immediate booking is thereby delayed for a further set period for each additional push of the response button. For example, the further set period could be shorter than the initial set period, such as within 5 to 20 minutes. Alternatively or additionally, the professional can decide to push and hold the response button for a set period, such as several seconds, to delay the immediate booking for a maximum set period, within 1 to 5 hours for example.

The selected delay of the immediate booking is then reported back to the professional at the regular customer, as mentioned earlier. Thus reducing the waiting time at the service company.

In an embodiment, the step of responding may be time limited with a response time of 1 or 2 or 3 or 4 or 5 minutes.

The configuration of the present system could be adapted in accordance with the workflow or setup at the service company such that a suitable response time for the professional. If no response or no delay is registered with the set response time, then a confirming response is generated and transmitted back to the regular customer informing regular customer that the booking is accepted and the booking time.

In an embodiment, the plurality of lamps may be signal lamps. The plurality of lamps may be positioned on a light board to simplify and make the system more compact. However, the lamps could in theory be spread throughout the service facility. The signal lamps could utilise different colours to differentiate between individual regular customers. The colour of the light thus provides a visual signal to the professional about the customer making the request.

In an embodiment, the lamp may start blinking when receiving a signal of an immediate booking. The lamp can be activated upon receiving the signal from the regular customer, where the lamp could start blinking or emit a continuous light. The professional is more prone to respond to the blinking light, hence why blinking is preferred. This will give the professional time to respond to the request for an immediate booking.

In an embodiment, the immediate booking may be for a time t after the step of requesting, where t is 10 or 15 or 20 or 25 or 30 minutes.

Preferably, the present system is configured to automatically generate a booking time, t₁, for a set period, t, after the time, t₀, of making the request. The set period could be selected based on the distance between the service company and the regular customer or the like, as mentioned earlier. The system could include different set periods for different regular customers. For example, the set period t could be selected within 10 to 30 minutes.

In an embodiment, the response sent to the regular customer may include a confirmation e-mail and/or text message and/or audio message and/or activation of a customer lamp.

The response may be in the form of an SMS or e-mail or app push notification or instruction to cause a speaker to announce the acceptance or delay using Google home or Siri or Alexi or similar text-to-voice services.

The method must use a lamp to give a visual indication, however there may also be steps of providing a siren sound or the like to indicate a booking. However, if the professional is working and using noisy equipment, then the professional may not hear the siren sound which is why light is preferred. The method may include a step of announcing the booking through a speaker using Google home or Siri or Alexi or similar text-to-voice services.

The customer lamp may be a LED lamp which is green if accepted without delay, yellow if accepted with a delay, or red if accepted with longest possible delay. Thereby the customer will either know or be able to estimate the booking time based on the colour of the customer lamp.

The customer lamp may be three signal lamps coloured red, green, and yellow for the same reasons as mentioned in the paragraph above.

In the examples, the colours mentioned in these examples are red, green, and yellow. However, it could any other three colours.

In an embodiment, the method may further comprise a step of booking a customs inspection wherein the plurality of lamps comprises a secondary lamp which will activate along with the lamp paired with the regular customer requesting the customs inspections booking. Thereby, the professional will know that the booking is not for a regular car inspection but rather for a customs inspection, which requires twice the amount of time in Denmark. A customs inspection is required in Denmark when a car is imported from another country, though there may be other laws in other countries. There may be other services, where being able to book two different periods of time is a requirement.

Thereby, the secondary lamp functions to inform the professional that the booking requires a factor more time. In case of a custom inspection the factor is two. There may be other factors and there may be a tertiary lamp associated with another factor or even more lamps.

These secondary or tertiary lamps are not associated with a specific customer and can be activated along with any of the other plurality of lamps.

The customer may book additional time by pressing a pattern on the booking push-button or by pressing the booking push-button constantly for a pre-set time period such as 2 seconds, or 3 seconds, or 4 seconds, or 5 seconds. In an embodiment, the method may further comprise a step of cancelling the immediate booking by pushing the booking push-button two consecutive times.

The professional at the regular customer can also cancel the request for an immediate booking by simply inputting a cancelling signal into the system. This could be achieved by pushing the booking button two times within a set period, for example for several seconds. Other cancelling sequences or signals could also be used. A cancelling signal is then generated and transmitted to the service company, where the lamp is turned off.

In a special embodiment, the method may further comprise a step of requesting a dedicated service at the service company by sending a dedicated booking signal to the service company.

The present invention could also be adapted so that the professionals at the regular customers may request one or more dedicated services at the service company, such as customs inspection or the like. This could be achieved by simply using another booking push-button or the same booking push-button. If the same booking push-button is used, then the professional must input another booking sequence than the abovementioned booking sequence. For example, the professional can push and hold the booking push-button for a set period to generate the dedicated booking signal.

The dedicated booking signal is then sent to the service company via the common server. Here a dedicated colour or blinking sequence may be emitted via the lamp, which informs the professional that a dedicated service is requested. The professional may then respond to this request as mentioned above.

An object of the invention is achieved by a system for managing immediate bookings from a plurality of regular customers by a service company, where the system comprising:
- a light controller located at the service company, the light controller comprising
   - one or more lamps, wherein each lamp is paired with a specific regular customer; wherein the light controller is configured, when receiving an immediate booking from a specific customer, to activate the lamp paired with the specific regular customer requesting an immediate booking,
   - one or more response push-buttons, wherein each response push-buttons is paired with a specific regular customer, wherein the light controller is configured, to delay the immediate booking from the specific customer for a set period when a response push-button is pushed;
   - a global communication unit configured to be in communication with a plurality of regular customers for receiving immediate bookings and for sending confirmation of immediate bookings with and without delay.

Thereby, a system is provided which can be utilised by professionals working at the service company to ensure that the professionals see and decide whether or not to delay the immediate booking. Since a regular customer is specifically paired with a specific lamp, the professional thus knows when the customer will arrive and can choose to either accept or delay based on this. The system may be configured to perform the earlier described method.

The system could in an embodiment include a common server in communication with the one or more local communication units and the global communication unit.

The use of a server allows local communication units at the regular customers to remotely communicate with the global communication unit at the service company via a communications link. The computer program for executing the abovementioned method steps and managing the data could be implemented on the common server. This allows the present system to be managed from a remote location.

The one or more lamps are preferably installed on a light board or optionally on two or more light boards.

There may be a plurality of lamps.

In an embodiment, wherein the system may comprise
- one or more customer controllers, wherein each customer controller is associated with a specific regular customer, the customer controller comprises
   - a communication device for communication with the global communication unit;
   - a booking push-button, wherein a push causes the customer controller to active the communication devices to send an immediate booking to the global communication unit.

Various local communication devices at the regular customer may be used to communicate with the common server. The communication devices could a stationary computer, a mobile telephone, a tablet, a laptop or the like.

The customer controller could be implemented on a device at the regular customer or on the common service. Similarly, the light controller could be implemented on a device at the service company or on the common service.

The system could in an embodiment include signal lamps as the lamps for the light controller.

The customer controller could be configured to detect one or more booking sequences inputted using the booking push-button. The customer controller could thus be configured to detect an immediate booking request and/or a cancelling request, as mentioned earlier.

The light controller could be configured to detect a booking confirmation via the respond push-button. The light controller could also be configured to detect a delay of the immediate booking request as mentioned earlier. The abovementioned set periods may be stored in the common server or stored locally in the light controller.

In an embodiment, the one or more lamps may be configured for blinking when receiving an immediate booking.

The lamps may be configured to emit a blinking light or continuous light when activated. The blinking sequence may be stored in the common server or locally in the light controller. Different blinking sequences and/or different colours of light may be used for different regular customers. The parameters for controlling the emitted light may be managed via the common server.

In an embodiment, wherein the service company may be a vehicle inspection facility or MOT testing centre.

The present invention could advantageously be implemented in vehicle inspection facilities and/or MOT testing centres. The present invention could also be implemented in similar companies where no booking is available.

In an embodiment, the plurality of regular customers may be a plurality of car repair shops and/or car dealers and/or taxi companies.

The present invention could advantageously be implemented in car repair shops and/or car dealers and/or taxi companies. The present invention could also be implemented in similar companies having a fleet of vehicles that requires inspections to comply with national laws.

### Description of the Drawing

Embodiments of the invention will be described in the figures, whereon:
- Fig. 1: illustrates a system for managing immediate bookings from a plurality of regular customers by a service company,
- Fig. 2: illustrates a method for managing immediate bookings from a plurality of regular customers by a service company,
- Fig. 3: illustrates an embodiment of the method for managing immediate bookings from a plurality of regular customers by a service company.

### Detailed Description of the Invention

| **Item** | **No** |
|---|---|
| Service company | 10 |
| Plurality of regular customers | RC-1, ..., RC-N |
| System | 100 |
| Booking push-button | 110 |
| Light board | 120 |
| Light controller | 122 |
| Plurality of lamps | L-X, L-1, ..., L-N |
| Response push-button | 130 |
| Communication devices | 140 |
| Local communication units | 150 |
| Global communication unit | 160 |
| Common server | 170 |
| Signal | 200 |
| Response | 300 |
| Method | 1000 |
| Requesting | 1100 |
| Sending | 1200 |
| Receiving | 1300 |
| Responding | 1400 |
| Accepting | 1410 |
| Delaying | 1420 |
| Sending | 1500 |
| Cancelling | 1600 |

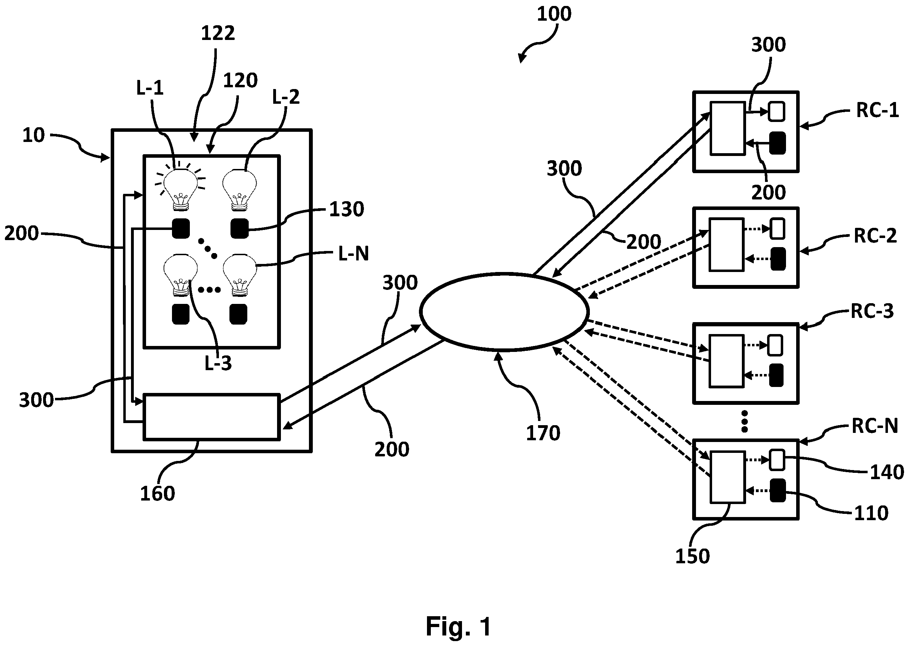

Figure 1 illustrates a system 100 for managing immediate bookings from a plurality of regular customers RC-1, ..., RC-N by a service company 10. One or more regular customers RC-1, ..., RC-N are provided with a booking push-button 110 for requesting 1100 an immediate booking at the service company 10. When a regular customer RC-1 pushes the booking push-button 110 a signal 200 is registered by a local communication unit 140, which sends the signal 200 to a common server 170 in communication with the local communication units 140 located at the one or more regular customers RC-1, ..., RC-N. The common server 170 is further in communication with a global communication unit 160 located at the service company 10, thus, the common server 170 sends the signal 200 to the global communication unit 160.

Upon receiving 1300 the signal 200, the global communication unit 160 sends the signal 200 to the light controller controlling a light board 120, which comprises one or more lamps L-1, ..., L-N representing the one or more regular customers RC-1, ..., RC-N, where the one or more lamps L-1, ..., L-N are configured to light up when receiving 1300 an immediate booking request. The lamp L-1, that represents the regular costumer RC-1 requesting 1100 the immediate booking, lights up when receiving 1300 the signal 200.

In some embodiments, the one or more lamps L-1, ..., L-N comprised in the light board 120 may be signal lamps.

In some embodiments, the one or more lamps L-1, ..., L-N comprised in the light board 120 may be configured to blink when receiving 1300 the signal 200 for an immediate booking request.

The light board 120 further comprises one or more response push-buttons 130 that are connected to the one or more lamps L-1, ..., L-N, where each lamp L-1, ..., L-N has a corresponding response push-button 130. After receiving 1300 the request for an immediate booking, a response may be provided within a response time, where the immediate booking is either accepted or delayed.

In some embodiments, the response time may be of 2 or 3 or 4 or 5 minutes.

The immediate booking is accepted by not pushing the response push-button 130 connected to the lighted lamp L-1, or the immediate booking is delayed by a set period by pushing the response push-button 130.

In some embodiments, the set period for delaying 1420 the immediate booking may be 10 or 15 or 20 or 25 or 30 or 45 or 60 minutes.

A response 300 for acceptance of the immediate booking is registered after the response period, and a response 300 for delay of the immediate booking is registered upon pushing the response push-button 130. Both actions send a response 300 to the global communication unit 160, from which the response 300 is sent to the common server 170. The common server 170 sends the response 300 to the local communication unit 150 located at the regular costumer RC-1 requesting 1000 the immediate booking, wherefrom the response 300 is sent to a communication device 140. The communication device 140 is in communication with the local communication unit 150 and is configured for receiving a response 300.

Upon receiving the response 300 the communication device 140 notifies the regular customer RC-1 about the acceptance or delay of the immediate booking.

In some embodiments, the communication device 140 may notify the regular customer RC-1 of the response 300 from the service company 10 by an e-mail and/or a text message.

The request for an immediate booking, may be for an immediate booking for a time t after making the request, where t may be 10 or 15 or 20 or 25 or 30 minutes.

In some embodiments the service company 10 may be a vehicle inspection facility.

In some embodiments the plurality of regular customers RC-1, ..., RC-N may be a plurality of car repair shops and/or car dealers.

The dotted arrows illustrated in figure 1 show the signal 200 and response 300 pathways for immediate booking request by the plurality of regular customers RC-1, ..., RC-N. For simplicity, only the request from one regular customer RC-1 was described above, however, multiple requests in sequence or simultaneous requests are also possible.

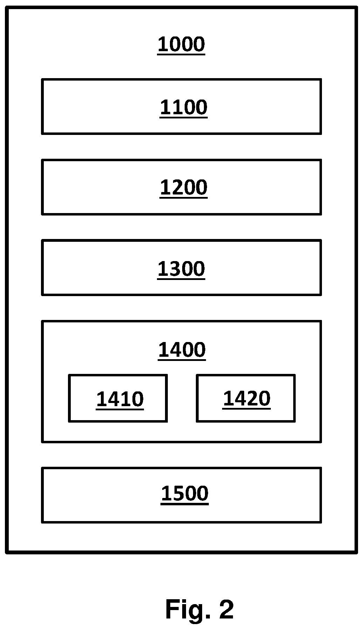

Figure 2 illustrates a method 1000 for managing immediate bookings from a plurality of regular customers RC-1, ..., RC-N by a service company 10.

The method 1000 comprises a step of requesting 1100 an immediate booking at the service company 10, where one or more regular customers RC-1, ..., RC-N push a booking push-button 110. Thereby sending 1200 a signal 200 from a local communication unit 150 located at the one or more regular costumers RC-1, ..., RC-N to the service company 10 through a common server 170. The common server 170 is in communication with the local communication units 150 and a global communication unit 160 located at the service company 10 (see figure 1).

The request for an immediate booking, may be for an immediate booking for a time t after making the request, where t may be 10 or 15 or 20 or 25 or 30 minutes.

The step of sending 1200 the signal 200 is followed by a step of receiving 1300 the signal 200 at the service company 10, where the signal 200 is received by the global communication unit 160. The signal 200 is then sent to a light board 120, which comprises one or more lamps L-1, ..., L-N representing the one or more regular customers RC-1, ..., RC-N, where the one or more lamps L-1, ..., L-N are configured to light up when receiving 1300 an immediate booking request (see figure 1). Upon receiving 1300 the signal 200, the one or more lamps L-1, ..., L-N representing the regular customers RC-1, ..., RC-N requesting 1100 the immediate booking light up.

In some embodiments, the plurality of lamps L-1, ..., L-N comprised in the light board 120 may be signal lamps.

In some embodiments, the plurality of lamps L-1, ..., L-N comprised in the light board 120 may be configured to blink when receiving 1300 the signal 200 for requesting 1100 an immediate booking.

The method 1000 further comprises a step of responding 1400 to the immediate booking by either accepting 1410 or delaying 1420 the immediate booking. The immediate booking is accepted by not pushing a response push-button 130 in connection with the one or more lighted lamps L-1, ..., L-N, and the immediate booking is delayed by a set period by pushing a response push-button 130 connection with the one or more lighted lamps L-1, ..., L-N.

One or more response push-buttons 130 are comprised within the light board 120 and are connected to the one or more lamps L-1, ..., L-N, where each lamp L-1, ..., L-N has a corresponding response push-button 130 (see figure 1).

In some embodiments, the step of responding 1400 may be time limited with a response time of 2 or 3 or 4 or 5 minutes.

In some embodiments, the set period for delaying 1420 the immediate booking may be 10 or 15 or 20 or 25 or 30 or 45 or 60 minutes.

A response 300 for accepting 1410 the immediate booking is registered after the response period, and a response 300 for delaying 1420 the immediate booking is registered upon pushing the response push-button 130. Both actions result in a step of sending 1500 a response 300 from the global communication unit 160 to a local communication unit 150 through the common server 170. The local communication unit 150 then sends the response to a communication device 140 located at the one or more regular costumers RC-1, ..., RC-N, that is configured for notifying the one or more regular costumers RC-1, ..., RC-N about the acceptance or delay of the immediate booking.

In some embodiments, the response 300 sent to the one or more regular customers RC-1, ..., RC-N may be a confirmation e-mail and/or text message.

In some embodiments the service company 10 may be a vehicle inspection facility.

In some embodiments the plurality of regular customers RC-1, ..., RC-N may be a plurality of car repair shops and/or car dealers.

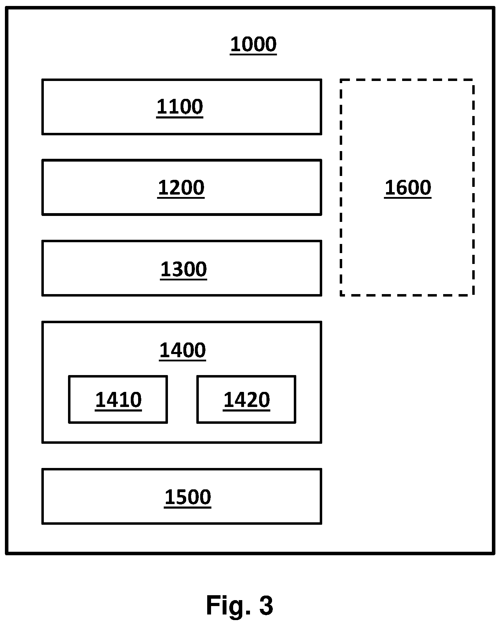

Figure 3 illustrates an embodiment of the method 1000 for managing immediate bookings from a plurality of regular customers RC-1, ..., RC-N by a service company 10.

The method 1000 illustrated in figure 3 may comprise the same steps as described for the method 1000 illustrated in figure 2, however, the embodiment of the method 1000 illustrated in figure 3 further comprises a step of cancelling 1600 the request for an immediate booking.

The immediate booking may be cancelled by pushing the booking push-button 110 two consecutive times.

The step of cancelling 1600 may be performed after the step of requesting 1100, the step of sending 1200, or the step of receiving 1300, causing the following steps of the method 1000 to be discontinued.

## Claims

1. A method (1000) for managing immediate bookings from a plurality of regular customers (RC-1, ..., RC-N) by a service company (10), where the method (1000) comprising steps of
- requesting (1100) an immediate booking at the service company (10) by pushing a booking push-button (110),
- sending (1200) a signal (200) to the service company (10) through a common server (170),
- receiving (1300) the signal (200) at the service company (10), where the signal (200) activates a lamp (L-X) among a plurality of lamps (L-1, ..., L-N) representing the plurality of regular customers (RC-1, ..., RC-N) optionally the plurality of lamps (L-1, ..., L-N) are positioned on a light board (120),
- responding (1400) to the immediate booking by either
- accepting (1410) the immediate booking by not pushing a response push-button (130) paired with the lighted lamp (L-X), or
- delaying (1420) the immediate booking for a set period by pushing the response push-button (130) paired with the lighted lamp (L-X),
- sending (1500) a response (300) to the regular customer (RC-X) through the common server (170), where the regular costumer (RC-X) is notified about the acceptance or delay of the immediate booking.

2. A method (1000) according to claim 1, wherein the service company (10) is a vehicle inspection facility or an MOT testing centre.

3. A method (100) according to claim 1 or 2, wherein the plurality of regular customers (RC-1, ..., RC-N) are a plurality of car repair shops and/or car dealers and/or taxi companies.

4. A method (1000) according to anyone of claims 1 to 3, wherein the set period for delaying (1420) the immediate booking is 10 or 15 or 20 or 25 or 30 or 45 or 60 minutes.

5. A method (1000) according to anyone of claims 1 to 4, wherein the step of responding (1400) is time limited with a response time of 1 or 2 or 3 or 4 or 5 minutes.

6. A method (1000) according to anyone of claims 1 to 5, wherein the plurality of lamps (L-1, ..., L-N) are signal lamps.

7. A method (1000) according to anyone of claims 1 to 6, wherein the lamp (L-1) starts blinking when receiving (1300) a signal (200) of an immediate booking.

8. A method (1000) according to anyone of claims 1 to 7, wherein the immediate booking is for a time t after the step of requesting (1100), where t is 10 or 15 or 20 or 25 or 30 minutes.

9. A method (1000) according to anyone of claims 1 to 8, wherein the response (300) sent to the regular customer (RC-1) includes a confirmation e-mail and/or text message and/or activation of a customer lamp.

10. A method (1000) according to anyone of claims 1 to 9, wherein the method (1000) further comprises a step of cancelling (1600) the immediate booking by pushing the booking push-button (110) two consecutive times.

11. A system (100) for managing immediate bookings from a plurality of regular customers (RC-1, ..., RC-N) by a service company (10), the system (100) comprising
- a light controller (122) located at the service company (10), the light controller (122) comprising
- one or more lamps (L-1, ..., L-N), wherein each lamp (L-1, ..., L-N) is paired with a specific regular customer (RC-1, ..., RC-N); wherein the light controller (120) is configured, when receiving an immediate booking from a specific customer (RC-1, ..., RC-N), to activate the lamp (L-1, ..., L-N) paired with the specific regular customer (RC-1, ..., RC-N) requesting an immediate booking,
- one or more response push-buttons (130), wherein each response push-buttons (130) is paired with a specific regular customer (RC-1, ..., RC-N), wherein the light controller (120) is configured, when a response push-buttons (130) is pushed, to delay the immediate booking from the specific customer (RC-1, ..., RC-N) for a set period;
- a global communication unit (160) configured to be in communication with a plurality of regular customers (RC-1, ..., RC-N) for receiving immediate bookings and for sending confirmation of immediate bookings with and without delay.

12. A system (100) according to claim 11, wherein the system comprises
- one or more customer controllers, wherein each customer controller being associated with a specific regular customer (RC-1, ..., RC-N), the customer controller comprises
- a communication device (140) for communication with the global communication unit (160);
- a booking push-button (110), wherein a push causes the customer controller to active the communication devices (140) to send an immediate booking to the global communication unit (160).

13. A system (100) according to claim 11 or 12, wherein the one or more lamps (L-1, ..., L-N) are configured for blinking when receiving an immediate booking.

14. A system (100) according to anyone of claims 11 to 13, wherein the service company (10) is a vehicle inspection facility or MOT testing centre.

15. A system (100) according to anyone of claims 11 to 14, wherein the plurality of regular customers (RC-1, ..., RC-N) are a plurality of car repair shops and/or car dealers and/or taxi companies.
